# EUROPEAN PATENT APPLICATION

(11) **EP 0 757 282 A2**
(43) Date of publication of application: **05.02.1997**
(21) Application number: 96111484.0
(22) Date of filing: 17.07.1996
(51) Int. Cl.: G03B 31/06

(54) **System for physically associating a sound, vocal and/or musical message with a photograph or with a slide-holder mount, and related device**

(30) Priority: 18.07.1995 IT UD950143
(71) Applicant: SUPREM S.R.L., 47037 Riccione (IT)
(72) Inventor: Corrado,Claudio, 33082 Azzano Decimo (Pordenone) (IT)
(74) Representative: Gustorf, Gerhard, Dipl.-Ing.

(57) **Abstract**

System for physically associating at least one sound, vocal and/or musical message with a photograph or with a slide-holder mount, comprising a phase (14) of applying a length of magnetic tape (12) to a support (13), consisting of the photograph (11) or of the slide-holder mount (26), a phase (16) of recording at least one sound message on said length of magnetic tape (12) and a phase (18) of listening to the recorded message, it being possible for at least some of the said phases (14, 16, 18) to be distant in time from one another.

Device for making the above system, having feed means acting on a continuous roll (28) of photographic support, feed means acting on a continuous roll (27) of magnetic tape and means for firmly and continuously physically associating said photographic support and said magnetic tape.

## Description

The subject of the present invention is a system for physically associating a sound, vocal and/or musical message with a photograph or with a slide-holder mount as expressed in the main claim.

A further subject of the invention is a device capable of making said system. The system according to the invention is applied in the photographic field for physically associating a vocal message which may be recorded, erased, modified or listened to as desired, with a card or plastic support reproducing a photograph or with the slide-holder mount.

Photographs have the drawback of being static and of not allowing the transmission of any type of message. Messages have to be written directly on the photo or on the back of the photo, often not achieving the desired effect. Systems have been proposed for physically associating a message with a photograph in which during the printing of the frame on the photosensitive paper, standard inscriptions, for example birthday greetings, Christmas greetings, or the like, are applied and are present in a few predetermined areas of the print, advantageously but not necessarily near certain parts of the peripheral frame.

The applicant has designed, tested and embodied the present invention in order to give greater and more meaningful value to photographs or to slides by adding a sound commentary to still pictures.

The present invention is expressed and characterized in the main claims. The dependent claims express variants of the idea of the main solution.

The object of the invention is to provide a system for physically associating at least one sound, vocal and/or musical message of any desired type with a photograph or with a slide. In the case of a photograph, the support can be made of paper, plastic or any other desired material, while in the case of a slide, the support consists of the slide-holder mount.

The system according to the invention provides for the application of a length of magnetic tape to the support of the photograph or of the slide. The length of magnetic tape can be applied either to the front face or to the back face of the support. The length of magnetic tape can be applied either along the longitudinal extent or along the vertical extent of the support.

In the system according to the invention, the magnetic tape can be fixed by gluing. According to a variant, the magnetic tape is made by spraying magnetic lacquer onto the support to constitute a continuous strip. In the case of printed and developed photographs, the length of magnetic tape can be applied directly to the support fed in the form of precut individual sheets or a continuous roll, before the printing and/or developing phase. According to a variant, the magnetic tape is applied to the support after the printing and/or developing phase or substantially simultaneously with said phase. According to yet another variant, the length of magnetic tape can be applied directly by the user to the already prepared photograph or to the slide-holder mounts. Said application can be effected either manually or with devices having a roll of continuous magnetic band. The system according to the invention furthermore comprises a recording/listening device which makes it possible to record, listen to and/or delete the messages stored on said length of magnetic tape. The recording/listening device can be either of monophonic or stereophonic type.

In the system according to the invention, at least some of the phases of applying the magnetic tape, recording the message and listening to the message can be distant in time from one another.

In a first formulation of the invention, the said recording/listening device has a fixed recording and/or playback head, the support being moved by suitable advancing means during the recording/listening phases. In a second formulation of the invention, the device has a recording and/or playback head that is movable along the support in order to carry out the message recording/listening functions.

According to a variant, the length of magnetic tape provides for a plurality of differentiated recording/playback tracks so that it is possible to physically associate several messages with the same support. In this case, the message recording/listening device comprises not only the normal controls for recording and listening to the message but also a selection unit for selecting the track which is desired to use at any time or which is required to be used at any time.

The appended figures are provided by way of non-limiting illustration and each depicts preferred versions of the invention. In the drawings:
- Fig. 1a depicts a photograph produced with the system according to the invention;
- Fig. 1b depicts a slide produced with the system according to the invention;
- Fig. 2 is a block diagram of a process for making the system according to the invention;
- Fig. 3 is a block diagram of a variant of the process of Fig. 2;
- Fig. 4 depicts a device for recording/listening to sound messages physically associated with a photograph;
- Fig. 5 depicts another embodiment of the device of Fig. 4;
- Fig. 6a depicts diagrammatically a device for continuously applying the length of magnetic tape to the photosensitive paper;
- Fig. 6b depicts diagrammatically a first variant of the device of Fig. 6a;
- Fig. 6c depicts diagrammatically a second variant of the device of Fig. 6a;
- Fig. 7 depicts diagrammatically a manual device for applying the length of magnetic tape to the photograph or to the slide-holder mounts.

With reference to the figures, the reference number 10 indicates generally a system for physically associating at least one sound message, vocal and/or musical, with the support 13 of a photograph 11 or of a slide 25. In the case of a photograph 11, the support 13 can consist of card, plastic or some other material suitable for the purpose and on which the photograph is printed and developed, while in the case of a slide 25, the support 13 consists of the slide-holder mount 26. In the system according to the invention, a length of magnetic tape 12 is applied securely to the support 13 of the photograph 11 or of the slide 25.

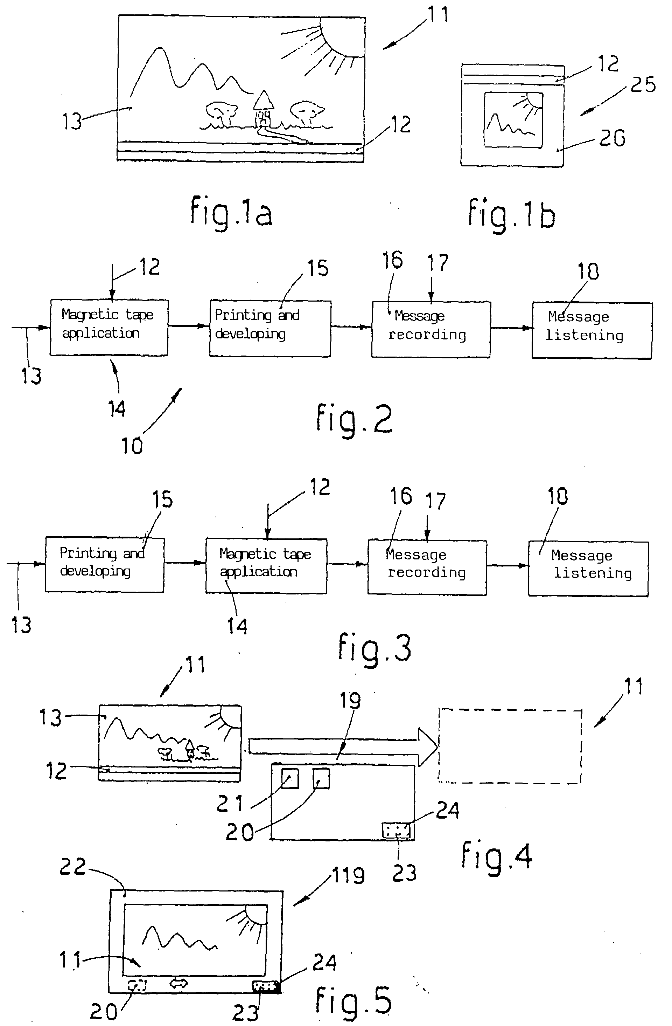

In the case of the photograph 11 depicted in Fig. 1, the length of magnetic tape 12 extends longitudinally to the photograph 11 and is applied to the front face of the support 13 of the photograph 11. According to a variant, the length of magnetic tape 11 extends vertically on the support 13 of the photograph 11. According to another variant, the length of magnetic tape 11 is applied to the back face, longitudianlly or vertically, of the support 13 of the photograph 11.

According to a first embodiment depicted in Fig. 2, the system 10 according to the invention provides for a phase 14 of applying the magnetic tape 12 directly to the support 13 of the photograph, before the printing and developing phase 15. In this case, the length of magnetic tape 12 must be appropriately protected so as to avoid possible damage thereto from the acid and non-acid baths in which the support 13 is immersed during the printing and developing phase 15.

According to another formulation of the invention depicted in Fig. 3, the phase 14 of applying the magnetic tape 12 to the support 13 is carried out after the printing and developing phase. The phase 14 of applying the length of magnetic tape 12 can be effected, for example, by gluing a length of preformed magnetic tape 12 to the support 13.

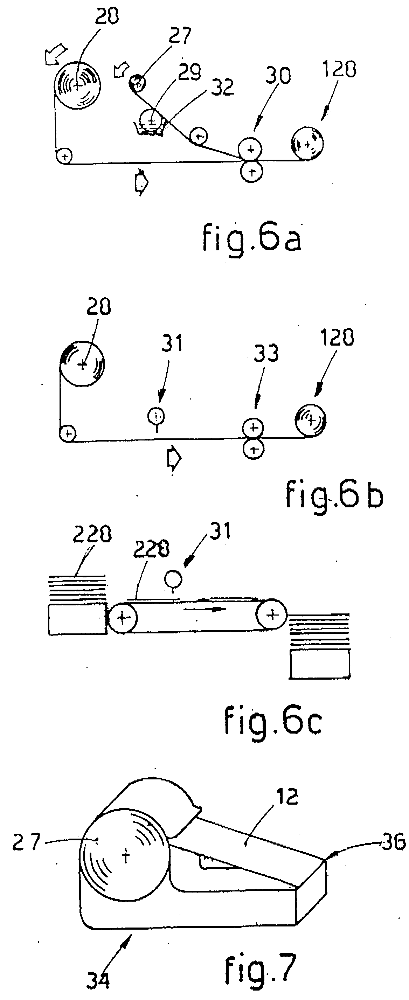

In the case of Fig. 6a, the device for carrying out the application has feed means acting on a continuous roll 27 of magnetic tape and feed means acting on a continuous roll of paper 28, said two rolls 27, 28 being physically associated continuously by gluing so as to obtain a continuous roll 128 of paper exhibiting the continuous magnetic tape 12. In the case in point, the magnetic tape which unwinds from the roll 27 co-acts with a roller 29, partially immersed in a tank 32 containing adhesive material, before being placed in contact, by a pair of presser rollers 30, with the advancing paper 28. In this case, the presser rollers 30 also act as a drive unit for the magnetic tape roll 27 and for the paper roll 28.

According to the variant depicted in Fig. 6b, the application device comprises means for spraying magnetic lacquer along a continuous strip on a continuous advancing paper roll 28. In that case, the spraying is carried out by spraying means 31 and the paper roll 28 is physically associated with a drive unit 33.

According to the variant depicted in Fig. 6c, the device for applying the magnetic tape 12, by spraying or gluing, is fed by a feed band 35 on which individually fed precut sheets of paper 228, or slide-holder mounts 26, are advanced.

According to yet another variant, the phase 14 of applying the length of magnetic tape 12 to the support 13 can be effected manually, or by a manual device 34.

Depicted in Fig. 7 is a device for manually applying the length of magnetic tape 12 to the support 13, the magnetic tape 12 being fed from a continuous roll 27 of magnetic tape, one of whose longitudinal faces is adhesive. In this case, the manual device 34 is substantially fashioned as a holder device for an adhesive band and has cutting means 36.

According to a variant, the manual device 34 also has pressing means which act on the length of magnetic tape 12 in order to ensure correct fixing to the support 13.

The photograph 11, or the slide 25, with the length of magnetic tape 12, next undergo a recording phase 16 in which the sound, vocal and/or musical message 17 is recorded on said length of magnetic tape 12.

The recording phase 16 can be carried out directly by the user or be effected which standard messages, for the purpose of advertising or greetings messages, for example. The useable magnetic tapes 12 make it possible to record over previously recorded messages, thereby erasing them, and hence the recording phase 16 can be carried out repeatedly.

According to a variant, the lengths of magnetic tape 12 have a plurality of tracks, thereby allowing several mutually independent messages to be physically associated with a photograph 11 or with a slide 25.

Once the phase 16 of recording the sound message or sound messages 17 has been carried out it is possible for the photograph 11, or the slide 25, to undergo the listening phase 18 with a playback, or playback/recording device 19 suitable for the purpose.

According to a first formulation of the innovation, said playback and/or recording device 19 can be of the type with fixed playback and/or recording head 20 as depicted diagrammatically in Fig. 4. In this case, the playback and/or recording device 19 comprises an advancer unit 21 which moves the support 13, in a direction parallel to the axis of the length of magnetic tape 12, during the recording and/or listening phases.

According to an advantageous embodiment depicted diagrammatically in Fig. 5, the playback and/or recording device 119 has a movable playback and/or recording head 20, the support 13 remaining stationary during the phases of recording 16 and listening 18 to the sound message 17.

The playback and/or recording head 20 can be either of the monophonic or stereophonic type.

In the present case, the playback and/or recording device 119 is physically associated with a photograph frame 22 and the playback and/or recording head 20 is physically associated with movable carriage means which run along an element constituting said photograph frame 22.

According to a variant, the playback and/or recording head 20 is of reversible type and operates in both directions of advance. The playback and/or recording device 19, 119 comprises, in addition to at least one loudspeaker, not depicted here, a control unit 23 for actuating all the functions necessary for the operation thereof. In the case of a magnetic tape 12 with several tracks, the control unit 23 also comprises a track selector device 24.

## Claims

1. System for physically associating at least one sound, vocal and/or musical message with a photograph or with a slide-holder mount, characterized in that it comprises a phase (14) of applying a length of magnetic tape (12) to a support (13), consisting of the photograph (11) or of the slide-holder mount (26), a phase (16) of recording at least one sound message on said length of magnetic tape (12) and a phase (18) of listening to the recorded message, it being possible for at least some of the said phases (14, 16, 18) to be distant in time from one another.

2. System according to claim 1, characterized in that the phase (14) of applying a length of magnetic tape (12) to the support (13) occurs before the printing and/or developing phase (15).

3. System according to claim 1, characterized in that the phase (14) of applying a length of magnetic tape (12) to the support (13) occurs after the printing and/or developing phase (15).

4. System according to anyone of the preceding claims, charcterized in that the phase (14) of applying a length of magnetic tape (12) provides for the gluing of the length of preformed magnetic tape to the support (13).

5. System according to anyone of claims 1 to 3, characterized in that the phase (14) of applying a length of magnetic tape (12) provides for the spraying of magnetic lacquer directly onto the support (13).

6. System according to anyone of the preceding claims, characterized in that the length of magnetic tape (12) is physically associated with the front face of the support (13).

7. System according to anyone of the preceding claims 1 to 5, characterized in that the length of magnetic tape (12) is physically associated with the back face of the support (13).

8. System according to anyone of the preceding claims, characterized in that the length of magnetic tape (12) is physically associated longitudinally with the support (13).

9. System according to anyone of claims 1 to 7, characterized in that the length of magnetic tape (12) is physically associated vertically with the support (13).

10. System according to anyone of the preceding claims, characterized in that the length of magnetic tape (12) has a plurality of recording/listening tracks.

11. System according to anyone of the preceding claims, characterized in that a playback and/or recording device (19) with fixed playback and/or recording head (20) is provided.

12. System according to claim 11, characterized in that the playback and/or recording device (19) has a unit (21) for advancing the support (13).

13. System according to anyone of claims 1 to 10, characterized in that a playback and/or recording device (illegible) with movable playback and/or recording head (20) is provided.

14. System according to claim 13, characterized in that the playback and/or recording head (20) is movable in both directions.

15. System according to anyone of the preceding claims, characterized in that it adopts what is contained in the description.

16. System according to anyone of the preceding claims, characterized in that it adopts what is contained in the figures.

17. Device for making the system described in claims 1 to 16, characterized in that it has feed means acting on a continuous roll (28) of photographic support, feed means acting on a continuous roll (27) of magnetic tape and means for firmly and continuously physically associating the photographic support and the magnetic tape.

18. Device for making the system described in claims 1 to 16, characterized in that it comprises spraying means (31) for applying a continuous strip of magnetic lacquer to the photographic support (13), said spraying means (31) acting on feed means acting on a continuous roll (28), on precut sheets (228), or on slide-holder mounts (26).

19. Device for making the system described in claims 1 to 16, characterized in that the means for firmly physically associating the length of magnetic tape (12) with the support (13) are fashioned as a manual support (34) containing a continuous roll of magnetic tape (27) and having pressing means and magnetic tape cutting means (36).

20. Device according to anyone of claims 17 to 19, characterized in that it adopts what is contained in the description.

21. Device according to anyone of claims 17 to 20, characterized in that it adopts what is contained in the figures.
